# EUROPÄISCHE PATENTSCHRIFT

(11) **EP 3 349 042 B1**
(45) Veröffentlichungstag und Bekanntmachung des Hinweises auf die Patenterteilung: **08.05.2019**
(21) Anmeldenummer: 17150936.7
(22) Anmeldetag: 11.01.2017
(51) Int. Cl.: G01S 17/48, G01S 17/93, G01S 17/02

(54) **ÜBERWACHUNGSSENSOR UND FLURGEBUNDENES FAHRZEUG**
SURVEILLANCE SENSOR AND FLOOR-BOUND VEHICLE
CAPTEUR DE SURVEILLANCE ET VÉHICULE RELIÉ PAR LE PLANCHER

(43) Veröffentlichungstag der Anmeldung: 18.07.2018
(73) Patentinhaber: SICK AG, 79183 Waldkirch/Breisgau (DE)
(72) Erfinder: Jachmann, Fabian, 79102 Freiburg (DE); Engler, Michael, 79350 Sexau (DE)
(74) Vertreter: Manitz Finsterwald Patent- und Rechtsanwaltspartnerschaft mbB

(56) Entgegenhaltungen:
- EP-A1- 1 947 477
- DE-A1-102004 047 022
- JP-A- 2001 004 746

## Beschreibung

Die vorliegende Erfindung betrifft einen Überwachungssensor zur ortsaufgelösten Detektion von Objekten in einem Überwachungsbereich nach dem Triangulationsprinzip, mit
- einem Lichtsender zum Aussenden von Sendelicht in den Überwachungsbereich, wobei der Lichtsender eine Lichtquelle und eine Sendeoptik, welche eine optische Achse aufweist, umfasst,
- einem Lichtempfänger, welcher mehrere Empfängerelemente aufweist, zum Empfangen von Licht aus dem Überwachungsbereich, welches von einem zu detektierenden Objekt remittiert wird, und
- einer dem Lichtempfänger vorgeordneten Empfangsoptik,
wobei der Lichtsender, der Lichtempfänger und die Empfangsoptik derart zueinander angeordnet sind, dass sich die Position eines mittels der Empfangsoptik aus dem remittierten Licht auf dem Lichtempfänger erzeugten Lichtflecks in einer Triangulationsrichtung in Abhängigkeit von der Entfernung des Objekts ergibt. Die Erfindung betrifft ferner ein flurgebundenes Fahrzeug mit einem Überwachungssensor.

Bei flurgebundenen Fahrzeugen, insbesondere fahrerlosen Transportfahrzeugen, besteht ein zunehmendes Bedürfnis, den Fahrweg des Fahrzeugs auf die Anwesenheit von Hindernissen mittels geeigneter Sensoren zu überwachen. Oftmals werden hierfür Laserscanner eingesetzt. Derartige Laserscanner weisen in der Regel bewegliche Optiken und Vorrichtungen zur Lichtlaufzeitmessung auf, was mit hohen Kosten verbunden ist.

Eine Alternative zur Verwendung von Laserscannern besteht in dem Einsatz von nach dem Prinzip der Lasertriangulation arbeitenden Überwachungssensoren gemäß der eingangs genannten Art. Ein derartiger Überwachungssensor ist aus EP 1 947 477 A1 bekannt.

Mit Hilfe eines derartigen Überwachungssensors kann die Entfernung eines im Überwachungsbereich vorhandenen Objekts oder Hindernisses bestimmt werden. Das von der Lichtquelle des Lichtsenders erzeugte Licht wird mit Hilfe der Sendeoptik zu einem Sendelichtstrahl fokussiert, welcher im Überwachungsbereich auf ein dort gegebenenfalls befindliches, zu detektierendes Objekt trifft. Das Sendelicht kann von einem solchen Objekt remittiert, d.h. diffus oder spiegelnd reflektiert, werden. Es tritt durch eine Empfangsoptik hindurch und kann von einem Lichtempfänger detektiert werden, der zusammen mit der Empfangsoptik eine Empfangseinheit bildet. Der Lichtempfänger besteht bei bekannten Lösungen aus einem Array von fotosensitiven Empfängerelementen.

In Abhängigkeit von der Entfernung zwischen dem Überwachungssensor und dem remittierenden Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Überwachungssensor bestimmt werden.

Zur Überwachung des Fahrwegs kann ein Überwachungssensor an einem Fahrzeug montiert werden, wobei der Überwachungssensor zweckmäßigerweise von dem zu überwachenden Fahrweg beabstandet angeordnet wird und derart ausgerichtet wird, dass das Sendelicht schräg unter einem vorgegebenen Neigungswinkel in Richtung des Fahrwegs emittiert wird und dort in einem entsprechenden Abstand von dem Überwachungssensor auftrifft. Der Fahrweg stellt somit eine Abtastebene dar. Der Überwachungsbereich erstreckt sich zwischen dem Überwachungssensor und dem Auftreffort des Sendelichts auf der Abtastebene.

Trifft das Sendelicht auf ein Objekt in dem Überwachungsbereich, das sich näher an dem Überwachungssensor befindet als der Auftreffort des Sendelichts auf die Abtastebene, so wird das Sendelicht, das durch die Empfangsoptik tritt, unter einem anderen Winkel in Richtung der Empfangsoptik remittiert, so dass sich die Position des aus dem remittierten Licht erzeugten Lichtflecks in Triangulationsrichtung auf dem Lichtempfänger verschiebt.

Damit nicht nur Objekte detektiert werden können, die sich unmittelbar in Blickrichtung des Überwachungssensors, d.h. auf oder nahe an der optischen Achse der Sendeoptik befinden, kann das Sendelicht lateral aufgeweitet werden, so dass es beim Auftreffen die Abtastebene oder allgemein auf eine gedachte Projektionsfläche eine Abtastlichtlinie erzeugt, die sich quer zur Blickrichtung des Überwachungssensors und damit in der Regel quer zur Fortbewegungsrichtung des Fahrzeugs und parallel zur Abtastebene erstreckt.

Das Sendelicht wird sozusagen fächerförmig aufgeweitet, so dass der Überwachungsbereich sich sektorförmig vom Überwachungssensor aus erstreckt. Gewöhnlich sind der Lichtsender, der Lichtempfänger und die Empfangsoptik derart ausgelegt und ausgerichtet, dass die Abtastlichtlinie auf der Abtastebene als gerade Linie quer zur Hauptüberwachungsrichtung des Überwachungssensors verläuft, die bei nicht vorhandenen Hindernissen als geradliniger Lichtfleck auf den Lichtempfänger abgebildet wird, wobei diese geradlinige Abbildung parallel zu den Zeilen oder Spalten des Lichtempfängers verläuft, in denen die Empfängerelemente angeordnet sind.

Eine Lateralposition auf dem Lichtempfänger, d.h. eine Position in der Erstreckungsrichtung des linienförmig abgebildeten Lichtflecks korrespondiert dabei mit einer jeweiligen Winkelposition innerhalb des sektorförmigen Überwachungsbereichs.

Wenn sich ein Objekt innerhalb des Überwachungsbereichs befindet, das von dem Sendelicht erfasst wird, verschiebt sich der Auftreffort des aus dem entsprechenden Winkel empfangenen Lichts quer, insbesondere senkrecht, zu der Erstreckungsrichtung des Lichtflecks auf dem Lichtempfänger. Mit anderen Worten ist ein kurzes Segment des linienförmigen Empfangslichtflecks, dessen Länge von dem Winkelbereich abhängt, über den sich das erfasste Objekt erstreckt, quer zu der Erstreckungsrichtung desjenigen geradlinigen Empfangslichtflecks versetzt, welcher ohne die Anwesenheit von Objekten im Überwachungsbereich erzeugt werden würde.

Mit einem derartigen Überwachungssensor können jedoch Objekte, die sich außerhalb einer in Richtung der optischen Achse der Sendeoptik verlaufenden Hauptüberwachungsrichtung befinden, nicht ausreichend zuverlässig und frühzeitig erfasst werden. Die Hauptüberwachungsrichtung fällt in der Regel mit der Fortbewegungsrichtung eines den Überwachungssensor tragenden Fahrzeugs zusammen.

Es besteht ein Bedürfnis, auch solche Fremdfahrzeuge oder andere Hindernisse zu erfassen, die sich quer zu dieser Fortbewegungsrichtung bewegen und den Fahrweg des Fahrzeugs unter Kollisionsgefahr kreuzen könnten.

Es ist daher die Aufgabe der vorliegenden Erfindung, einen Überwachungssensor zu schaffen, der auch in seitlichen Randbereichen des Überwachungsbereichs eine zuverlässige Objekterkennung gewährleistet. Ferner soll ein entsprechendes Fahrzeug mit einem verbesserten Überwachungssensor bereitgestellt werden.

Die Lösung der Aufgabe erfolgt durch einen Überwachungssensor mit den Merkmalen des Anspruchs 1 und durch ein Fahrzeug mit den Merkmalen des Anspruchs 9.

Bei dem erfindungsgemäßen Überwachungssensor ist vorgesehen, dass die Sendeoptik dazu eingerichtet ist, das von der Lichtquelle emittierte Licht zu einem Sendelichtbündel zu fokussieren, welches beim Auftreffen auf eine Abtastebene, welche zu der optischen Achse der Sendeoptik um einen vorgegebenen Neigungswinkel in der Triangulationsrichtung geneigt verläuft, eine Abtastlichtlinie erzeugt, die aus Richtung des Überwachungssensors betrachtet konkav gekrümmt verläuft.

Die Empfängerelemente sind vorteilhafterweise in Form eines zweidimensionalen Arrays angeordnet und sind dazu eingerichtet, empfangenes Licht in elektrische Empfangssignale umzuwandeln. Es kann eine Auswerteeinheit zum Erzeugen eines Erfassungssignals aus den Empfangssignalen vorgesehen sein. Entsprechend dem Triangulationsprinzip können Lichtempfänger und Lichtsender in Triangulationsrichtung voneinander beabstandet sein, so dass die Strahlengänge des Sendelichts und des Empfangslichts eine Parallaxe zueinander aufweisen.

Die genannte Abtastebene kann als eine fiktive Referenzebene angesehen werden. In der Praxis kann die Abtastebene beispielsweise auch einer realen Fläche, z.B. einem zu überwachenden Fahrweg, entsprechen, die aufgrund örtlicher Gegebenheiten nicht zwingend exakt eben sein muss. Der genannte Neigungswinkel hängt in der Regel von dem Abstand des Überwachungssensors von der Abtastebene, d.h. der Höhe des Befestigungspunktes des Überwachungssensors an dem Fahrzeug über dem Fahrweg des Fahrzeugs, und der gewünschten maximalen Ausdehnung des Überwachungsbereichs entsprechend dem Abstand der Abtastlichtlinie vom Überwachungssensor ab.

Der Überwachungssensor ist derart ausgestaltet bzw. ausgerichtet, dass die Triangulationsrichtung quer, vorteilhafterweise senkrecht, zu der Abtastebene verläuft. Eine von einer Senkrechten der Abtastebene abweichende Neigung der Triangulationsrichtung in Bezug auf die Abtastebene ist vorteilhafterweise nur innerhalb einer Ebene vorgesehen, welche senkrecht zur Abtastebene verläuft und die optische Achse der Sendeoptik umfasst.

Die gewünschte Krümmung der Abtastlichtlinie wird vorteilhafterweise dadurch erzielt, dass die Sendeoptik außeraxiale Strahlen mit zunehmendem lateralem Winkelabstand von der optischen Achse der Sendeoptik stärker nach unten in Richtung der Abtastebene lenkt.

Mit dem erfindungsgemäßen Überwachungssensor können seitliche Teilbereiche des Überwachungsbereichs, d.h. Teilbereiche, die sich seitlich der Hauptüberwachungsrichtung befinden, besser überwacht werden. Zwar wäre potentiell auch eine Überwachung dieser seitlichen Bereiche dadurch möglich, dass eine ausreichend lange geradlinige Abtastlichtlinie erzeugt wird, so dass ein geeigneter Raumwinkelbereich überdeckt wird. Allerdings bestünde dann das Problem, dass bei zunehmenden Winkeln der Auftreffort des Sendelichts auf die Abtastebene immer weiter vom Überwachungssensor entfernt ist und das Sendelicht somit unter einem immer flacheren Winkel auf die Abtastebene auftrifft. Infolgedessen wird von diesen Orten keine ausreichende Lichtmenge mehr in Richtung des Lichtempfängers remittiert, so dass eine zuverlässige Detektion von remittiertem Licht durch den Lichtempfänger in diesen äußeren Bereichen nicht mehr gewährleistet ist.

Diese Problematik wird durch die vorliegende Erfindung vermieden, da durch die konkave Krümmung der Abtastlichtlinie die Auftrefforte des Sendelichts auf die Abtastebene in äußeren Winkelbereichen des Überwachungsbereichs näher am Überwachungssensor liegen, als dies bei einer geradlinig verlaufenden Abtastlichtlinie der Fälle wäre.

Gemäß einer vorteilhaften Ausführungsform der Erfindung entspricht der Verlauf der Abtastlichtlinie auf der Abtastebene einem Segment eines Kreises, einer Parabel, einer Hyperbel oder einer Ellipse.

Diese Verläufe haben sich als geeignet herausgestellt, um die gewünschte Verbesserung bei der Abtastsicherheit zu erzielen. Bei der Ausgestaltung der Abtastlichtlinie als Kreissegment ergibt sich zudem der Vorteil, dass der Abstand der Abtastlichtlinie und damit die Ausdehnung des Überwachungsbereichs über den gesamten Winkelbereich des abgetasteten Sektors gleichbleibt. Der Öffnungswinkel des abgetasteten sektorförmigen Bereichs, d.h. der Winkelbereich, über den sich der Überwachungsbereich erstreckt, beträgt vorteilhafterweise mindestens 45°, bevorzugt mindestens 90° und insbesondere bis zu 180°.

Vorteilhafterweise erzeugt das von der Sendeoptik fokussierte Sendelichtbündel in Projektion auf eine senkrecht zur optischen Achse der Sendeoptik verlaufende Referenzabtastebene eine gekrümmte Referenzlichtlinie. Der Verlauf der Referenzlichtlinie kann als Referenz für die Auslegung der Sende- bzw. Empfangsoptik dienen, so dass sich insbesondere die bei einer Berechnung der Optiken notwendigen Rechenschritte vereinfachen lassen. Der Scheitelpunkt der Referenzlichtlinie entspricht vorteilhafterweise dem Schnittpunkt der optischen Achse der Sendeoptik mit der Referenzabtastebene.

Gemäß einer weiteren vorteilhaften Ausführungsform der Erfindung ist die Intensitätsverteilung der Abtastlichtlinie in Längsrichtung und/oder in Querrichtung der Abtastlichtlinie homogen. Durch eine entsprechende Auslegung der Sendeoptik wird gewährleistet, dass zum einen die Abbildung der Abtastlichtlinie auf dem Lichtempfänger, d.h. der Lichtfleck, möglichst scharf begrenzt ist und zum anderen eine möglichst homogene Intensitätsverteilung des Lichtflecks über seine gesamte Länge gegeben ist. Dadurch wird eine zuverlässige Objektdetektion über den gesamten Überwachungsbereich ermöglicht.

Vorteilhafterweise ist die Empfangsoptik dazu eingerichtet, ein einer geraden Linie entsprechendes Abbild der Abtastlichtlinie auf dem Lichtempfänger zu erzeugen. Für ein derartiges geradliniges Abbild der Abtastlichtlinie auf dem Lichtempfänger wird modellhaft angenommen, dass das Sendelicht auf eine plane Abtastebene auftrifft, so dass keine Verzerrungen bei der Krümmungsform der Abtastlichtlinie auftreten. Die Empfangsoptik macht sozusagen die Verzeichnungen der Sendeoptik "rückgängig", die notwendig sind, um etwa eine gedachte geradlinig verlaufende Abtastlichtlinie in die erfindungsgemäße konkav gekrümmte Abtastlichtlinie zu überführen.

Bei Verwendung einer Empfangsoptik, die diese Verzeichnungen nicht berücksichtigen würde, würde auf dem Lichtempfänger ein ebenfalls gekrümmt verlaufender Lichtfleck entstehen, was die Auswertung eines von dem Lichtempfänger erzeugten Bildes aufwendiger machen würde, da dann nicht mehr z.B. lediglich zeilenweise bzw. spaltenweise ein Maximum der Lichtverteilung ermittelt werden könnte, sondern radiale Komponenten bei der Entfernungsermittlung berücksichtigt werden müssten. Zudem wird die lichtempfindliche Fläche des Lichtempfängers optimal ausgenutzt. Das Erzeugen eines Lichtflecks in Form eines geradlinigen Abbildes der Abtastlichtlinie bietet ferner den Vorteil, dass die Variation der Lichtfleckposition auf dem Lichtempfänger in Abhängigkeit von dem Abstand eines zu detektierenden Objekts von dem Überwachungssensor unabhängig von der Winkelposition des Objekts weitgehend gleichbleibt.

Vorteilhafterweise sind die Empfängerelemente des Lichtempfängers in Reihen und Spalten angeordnet, wobei das Abbild der Abtastlichtlinie auf dem Lichtempfänger parallel zu den Reihen oder Spalten verläuft. Hierdurch wird die Auswertung des von dem Lichtempfänger erzeugten Bildes nochmals erleichtert.

Es hat sich als vorteilhaft erwiesen, wenn die Sendeoptik und/oder die Empfangsoptik jeweils wenigstens eine Linse umfassen, wobei zumindest eine lichtbrechende Fläche der Linse als Freiformfläche ausgebildet ist. Durch die Ausgestaltung zumindest einer lichtbrechenden Fläche als Freiformfläche lassen sich auf einfache und kostengünstige Weise die gewünschten Verzeichnungen beim Erzeugen der Abtastlichtlinie bzw. beim Erzeugen eines Abbildes der Abtastlichtlinie auf dem Lichtempfänger erreichen. Grundsätzlich ist es auch möglich, dass die Sende- und/oder die Empfangsoptik als Spiegeloptik ausgebildet sind oder eine jeweilige Kombination aus einer oder mehreren Spiegeloptiken und einer oder mehreren Linsen umfassen. Vorteilhafterweise können die Sendeoptik und/oder die Empfangsoptik jeweils wenigstens eine Spiegeloptik umfassen, deren lichtreflektierende Fläche als Freiformfläche ausgebildet ist.

Vorteilhafterweise weist die Sendeoptik wenigstens zwei Freiformflächen auf, wobei eine erste Freiformfläche derart ausgestaltet ist, dass diese für sich genommen eine gerade verlaufende Abtastlichtlinie auf der Abtastebene erzeugen würde, und wobei eine zweite Freiformfläche derart ausgestaltet ist, dass diese die Krümmung der Abtastlichtlinie bewirkt. Die erste Freiformfläche bewirkt also eine Kollimation des Sendelichts in Triangulationsrichtung und eine Spreizung des Sendelichts in Richtung des Öffnungswinkels. Die zweite Freiformfläche dient dazu, außeraxiale Strahlen mit zunehmendem lateralen Winkelabstand von der optischen Achse der Sendeoptik stärker nach unten in Richtung der Abtastebene abzulenken, um die gewünschte Krümmung der Abtastlichtlinie zu generieren. Beispielsweise können die Freiformflächen an einer oder auch an mehreren Linsen vorgesehen sein. Insbesondere können die beiden lichtbrechenden Flächen einer einzigen Linse als jeweilige Freiformfläche ausgebildet sein.

Die vorliegende Erfindung erstreckt sich auch auf ein flurgebundenes Fahrzeug, insbesondere fahrerloses Transportfahrzeug, mit einem Überwachungssensor nach zumindest einer der vorstehend genannten Ausführungsformen zum Überwachen eines Fahrwegs des Fahrzeugs.

Vorteilhafterweise ist der Überwachungssensor von dem zu überwachenden Fahrweg beabstandet an dem Fahrzeug angeordnet und derart ausgerichtet, dass die optische Achse der Sendeoptik einen ebenen Fahrweg in einem vorgegebenen Abstand von dem Fahrzeug schneidet.

Weitere vorteilhafte Ausführungsformen der Erfindung ergeben sich aus der Beschreibung, den Zeichnungen und den Unteransprüchen.

Die Erfindung wird nachfolgend anhand eines Ausführungsbeispiels mit Bezug auf die Zeichnungen beschrieben. Es zeigen:
- Fig. 1: ein Fahrzeug mit einem Überwachungssensor gemäß einem Ausführungsbeispiel der vorliegenden Erfindung in Seitenansicht,
- Fig. 2: das Fahrzeug und Überwachungssensor von Fig. 1 in Draufsicht,
- Fig. 3: ein schematischer Sendelichtstrahlengang,
- Fig. 4: eine Sendeoptik des Überwachungssensors von Fig. 1 und 2 in Draufsicht,
- Fig. 5: verschiedene Teilstrahlengänge des Sendelichts in Schnittdarstellung, und
- Fig. 6: eine Empfangsoptik des Lichtempfängers von Fig. 1 und 2.

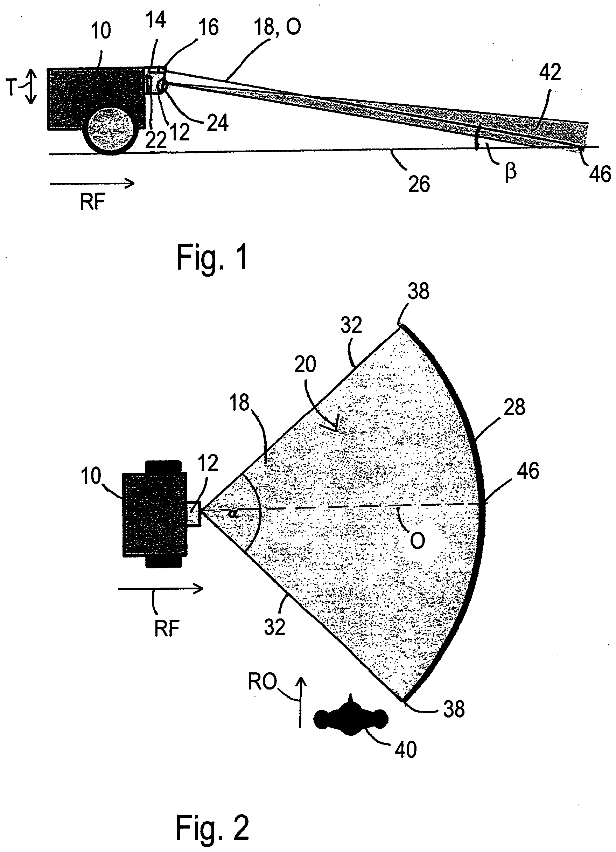

Fig. 1 und 2 zeigen ein flurgebundenes Fahrzeug 10, welches sich entlang eines Fahrwegs 26 in einer Bewegungsrichtung RF fortbewegen kann. An dem Fahrzeug 10 ist von dem Fahrweg 26 beabstandet ein Überwachungssensor 12 zur ortsaufgelösten Detektion von Objekten in einem Überwachungsbereich 20 angeordnet.

Der Überwachungssensor 12 weist einen Lichtsender zum Aussenden von Sendelicht in den Überwachungsbereich 20 auf, wobei der Lichtsender eine Lichtquelle 14 und eine Sendeoptik 16, welche eine optische Achse O aufweist, umfasst. Der Überwachungssensor 12 umfasst ferner einen Lichtempfänger 22, welcher mehrere Empfängerelemente aufweist, die arrayförmig in Reihen und Spalten angeordnet sind. Dem Lichtempfänger 22 ist eine Empfangsoptik 24 vorgeordnet, welche Licht aus dem Überwachungsbereich 20, welches von einem zu detektierenden Objekt 40 bzw. dem Fahrweg 26 remittiert wird, in Richtung auf den Lichtempfänger 22 fokussiert.

Die Lichtquelle 14, die Sendeoptik 16, der Lichtempfänger 22 und die Empfangsoptik 24 sind derart zueinander angeordnet und ausgerichtet, dass sich die Position eines mittels der Empfangsoptik 24 auf dem Lichtempfänger 22 erzeugten Lichtflecks in einer Triangulationsrichtung T in Abhängigkeit von der Entfernung des Objekts 40 ergibt, wobei Licht, welches aus einem Empfangslichtbereich 42 remittiert wird, erfasst werden kann.

Aus Gründen der Übersichtlichkeit ist in der Seitenansicht von der Fig. 1 der Strahlengang lediglich in Schnittansicht dargestellt, wobei die Schnittebene entlang der optischen Achse O verläuft.

Der Überwachungssensor 12 ist gegenüber dem Fahrweg 26 geneigt, so dass ein entlang der optischen Achse O ausgesendeter Lichtstrahl in einem von dem Fahrzeug 10 beabstandeten Auftreffpunkt 46 unter einem Neigungswinkel β auf den Fahrweg trifft.

Die Sendeoptik 16 ist dazu eingerichtet, das Sendelicht 18 in der Triangulationsrichtung T bzw. quer zu einer Ebene, die durch den Fahrweg 26 definiert wird und nachfolgend auch als Abtastebene 26 bezeichnet wird, zu kollimieren und in einer hierzu orthogonalen Richtung in Richtung eines Öffnungswinkels α (Fig. 2) aufzuweiten oder zu spreizen. Das Sendelichtbündel 18 erstreckt sich damit fächerförmig in den Überwachungsbereich 20. Durch die Kollimation einerseits und die fächerförmige Aufweitung andererseits wird das Sendelicht 18 mittels der Sendeoptik 16 derart geformt, dass es bei Abwesenheit von Objekten oder anderen Hindernissen im Strahlengang auf der Abtastebene 26 eine Abtastlichtlinie 28 erzeugt, die aus Richtung des Überwachungssensors 12 betrachtet konkav gekrümmt verläuft (siehe Fig. 2). Die Ausgestaltung und Funktion der Sendeoptik 16 wird nachfolgend noch näher beschrieben.

Die Krümmung der Abtastlichtlinie 28 entspricht im Ausführungsbeispiel gemäß Fig. 2 einem Kreissegment, wobei der Öffnungswinkel α ungefähr 90° beträgt.

Gemäß einer Abwandlung kann die Abtastlichtlinie 28 auch einem Segment einer Hyperbel, einer Parabel oder einer Ellipse entsprechen.

Die Empfangsoptik 24 ist dazu eingerichtet, die Abtastlichtlinie 28 derart auf den Lichtempfänger 22 abzubilden, dass ein einer geraden Linie entsprechender Lichtfleck auf dem Lichtempfänger 22 erzeugt wird, wobei dieser geradlinige Lichtfleck parallel zu der Abtastebene 26 und senkrecht zur Triangulationsrichtung T parallel zu den Reihen oder Spalten des Lichtempfängers 22 verläuft. Die Ausgestaltung und Funktion der Empfangsoptik 24 wird nachfolgend noch näher beschrieben.

Wenn ein Objekt 40, beispielsweise ein fremdes Fahrzeug, ein Hindernis oder eine Person, in den Überwachungsbereich 20 gelangt und von dem Sendelichtbündel 18 erfasst wird, wird ein der Ausdehnung des Objekts 40 entsprechender Teilbereich des Sendelichtbündels 18 von dem Objekt 40 in Richtung auf die Empfangsoptik 24 remittiert, wobei sich der Triangulationswinkel, unter dem das remittierte Licht auf die Empfangsoptik 24 und den Lichtempfänger 22 trifft, in Abhängigkeit von dem Abstand des Objekts 40 ändert. Entsprechend ändert sich der Auftreffort des Empfangslichts für einen entsprechenden Abschnitt des Empfangslichtflecks in Triangulationsrichtung.

Somit kann der Abstand eines detektierten Objekts 40 aus der Variation des Auftrefforts auf dem Lichtempfänger 22 in Triangulationsrichtung T ermittelt werden, während die Winkelposition des Objekts aus der Position des Auftrefforts auf dem Lichtempfänger 22 in einer Richtung quer zur Triangulationsrichtung T bestimmt werden kann.

Die konkave Krümmung der Abtastlichtlinie 28 verbessert dabei die Erfassung von Objekten in seitlichen Bereichen des Überwachungsbereichs 20. So kann beispielsweise ein Objekt 40, dessen Bewegungsrichtung RO gemäß Fig. 2 quer zu der Bewegungsrichtung RF des Fahrzeugs 10 verläuft, bereits zu einem frühen Zeitpunkt erfasst werden, so dass eine eventuelle Kollision mit dem Fahrzeug 10 vermieden werden kann.

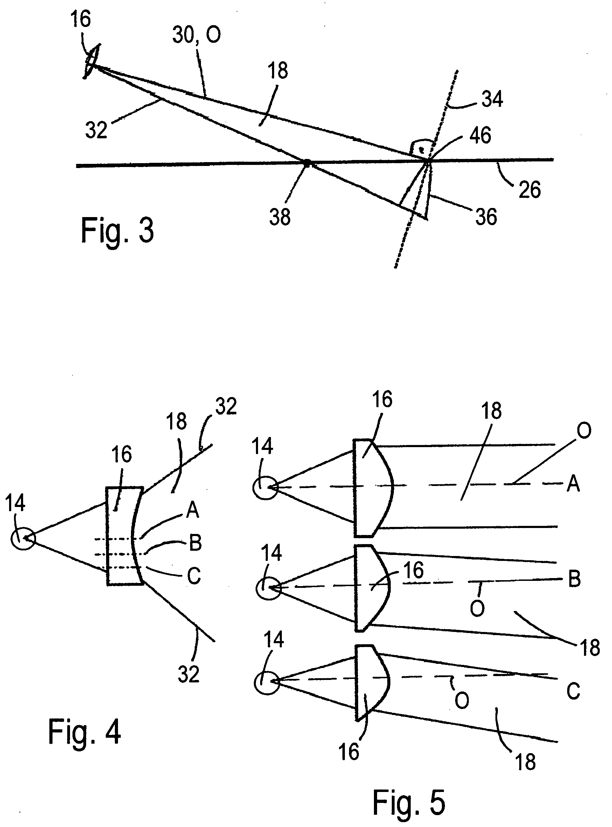

Die Ausgestaltung der Sendeoptik 16 wird im Folgenden mit Bezug auf Fig. 3 bis 5 näher erläutert. Fig. 3 zeigt schematisch einen Sendelichtstrahlengang in seitlicher Ansicht, wobei im Unterschied zu Fig. 1 nicht nur ein entlang der optischen Achse O der Sendeoptik 16 verlaufender mittlerer Sendelichtstrahl 30 des Sendelichtbündels 18 dargestellt ist, sondern zusätzlich auch die beiden äußeren Sendelichtstrahlen 32, die in der Perspektive von Fig. 3 hintereinanderliegen und insofern in der Darstellung nicht voneinander getrennt sichtbar sind. Wie in Fig. 3 gut zu erkennen ist, treffen die äußeren Sendelichtstrahlen 32 unter einem größeren Winkel auf die Abtastebene 26 als der mittlere Sendelichtstrahl 30. Die äußeren Sendelichtstrahlen 32 treffen in Durchtrittspunkten 38 auf die Abtastebene 26 auf bzw. schneiden diese, während der mittlere Sendelichtstrahl 30 in dem Auftreffpunkt 46 auf die Abtastebene 26 trifft.

Die Berechnung der Sendeoptik 16 kann beispielsweise auf der Grundlage einer Referenzlichtlinie 36 erfolgen, die als Abbild oder Projektion des Sendelichtbündels 18 nach Durchtritt durch die hier als transparent angenommene Abtastebene 26 auf einer Referenzabtastebene 34 erzeugt wird, die senkrecht zum mittleren Sendelichtstrahl 30 bzw. zur optischen Achse O verläuft. In der Darstellung von Fig. 3 ist die so entstandene Referenzlichtlinie 36 in die Zeichenebene gedreht. Die Referenzlichtlinie 36 weist einen hyperbel- oder parabelähnlichen Verlauf auf, wobei der Scheitelpunkt im Auftreffpunkt 46 liegt.

In Fig. 4 und 5 ist eine beispielhafte Sendeoptik 16 dargestellt, mit welcher der beschriebene Sendelichtstrahlengang erzeugt werden kann. Die Sendeoptik 16 ist hier beispielhaft als bikonische Linse ausgebildet, wobei die eine lichtbrechende Fläche der Linse plan und die andere lichtbrechende Fläche in Draufsicht gemäß Fig. 2 und 4 konkav und in Seitenansicht gemäß Fig. 1 und 5 konvex gekrümmt ist.

Die konkave Krümmung der lichtbrechenden Fläche bewirkt gemäß Fig. 4 das fächerförmige Aufspreizen des Sendelichtbündels 18, während der konvexe Krümmungsanteil gemäß Fig. 5 die Kollimation des Sendelichtbündels in Triangulationsrichtung T und die winkelabhängige Änderung des Abstrahlwinkels bewirkt.

In Fig. 4 sind drei voneinander beabstandete Schnittebenen A bis C eingezeichnet. Die Schnittebene A verläuft in der Mitte der Sendeoptik 16, die Schnittebene C in einem äußeren Bereich und die Schnittebene B zwischen den Schnittebenen A und C. Die zugehörigen Schnittdarstellungen sind in Fig. 5 dargestellt. Hier ist gut zu erkennen, dass in allen drei Schnittebenen A bis C eine weitgehend parallele Kollimation des Sendelichtbündels 18 stattfindet. Während das Strahlenbündel 18 in der Schnittebene A parallel zur optischen Achse O verläuft, nimmt die Neigung des Strahlenbündels 18 in Bezug auf die optische Achse O nach außen hin zu.

Die wirksame lichtbrechende Fläche der Sendeoptik 16 kann vorzugsweise als Freiformfläche ausgestaltet sein, wobei deren Berechnung auf der Grundlage der Referenzlichtlinie 36 (Fig. 3) erfolgen kann.

Grundsätzlich müssen die verschiedenen optischen Funktionen der Sendeoptik 16 nicht in einer einzigen lichtbrechenden Fläche verwirklicht sein, sondern können auch auf verschiedene lichtbrechende Flächen einer einzigen oder mehrerer Linsen verteilt werden.

Um eine geradlinige Abbildung der Abtastlichtlinie 28 auf dem Lichtempfänger 22 zu erzielen, kann die Empfangsoptik 24 in entsprechender Weise ausgestaltet sein, wobei im Wesentlichen die winkelabhängigen Verzerrungen, welche die Krümmung der Abtastlichtlinie 28 bewirken, wieder "rückgängig" gemacht werden sollen. Eine der divergenten Komponente der Sendeoptik 16 entsprechende Eigenschaft, wie sie bei der Sendeoptik 16 zur fächerförmigen Aufspreizung des Strahlenbündels vorgesehen ist, kann in der Regel bei der Empfangsoptik 24 entfallen.

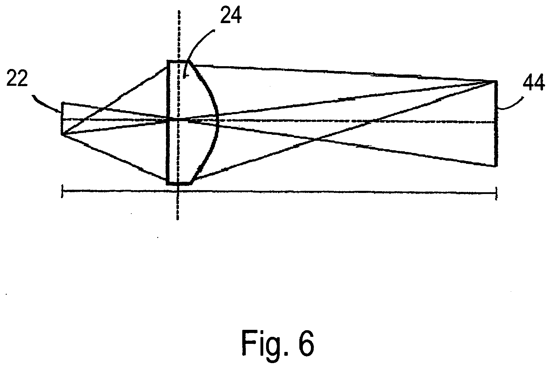

Eine beispielhafte Empfangsoptik 24 ist in Fig. 6 schematisch dargestellt. Die Empfangsoptik 24 ist bezüglich ihrer Brennweite und ihres Öffnungswinkels so ausgelegt, dass ein der Erstreckung der Abtastlichtlinie 28 entsprechender Abbildungsbereich 44 möglichst formatfüllend auf den Lichtempfänger 22 abgebildet wird. Dadurch wird vermieden, dass unerwünschtes Streulicht auf den Lichtempfänger 22 gelangt. Entsprechend sollen die Durchtrittspunkte 38 der äußeren Sendelichtstrahlen 32 (Fig. 2 und 3) in möglichst randnahe Bereiche Lichtempfängers 22 abgebildet werden. Letztlich wird dadurch gewährleistet, dass Sendelicht 18, das an unterschiedlichen Positionen im Überwachungsbereich 20 in Richtung des Überwachungssensors 12 remittiert wird, mit möglichst gleichbleibender Helligkeit auf den Lichtempfänger 22 fokussiert wird, so dass der Überwachungssensor 12 eine möglichst positionsunabhängige Empfindlichkeit aufweist. Eine oder mehrere lichtbrechenden Flächen der Sendeoptik 16 können ebenfalls als Freiformflächen ausgestaltet sein,

### Bezugszeichenliste

- 10: Fahrzeug
- 12: Überwachungssensor
- 14: Lichtquelle
- 16: Sendeoptik
- 18: Sendelicht, Sendelichtbündel
- 20: Überwachungsbereich
- 22: Lichtempfänger
- 24: Empfangsoptik
- 26: Fahrweg, Abtastebene
- 28: Abtastlichtlinie
- 30: mittlerer Sendelichtstrahl
- 32: äußerer Sendelichtstrahl
- 34: Referenzabtastebene
- 36: Referenzlichtlinie
- 38: Durchtrittspunkt
- 40: Objekt
- 42: Empfangslichtbereich
- 44: Abbildungsbereich
- 46: Auftreffpunkt

- A bis C: Schnittebene
- O: optische Achse
- RF: Bewegungsrichtung des Fahrzeugs
- RO: Bewegungsrichtung des Objekts
- T: Triangulationsrichtung
- α: Öffnungswinkel
- β: Neigungswinkel

## Patentansprüche

1. Überwachungssensor (12) zur ortsaufgelösten Detektion von Objekten in einem Überwachungsbereich (20) nach dem Triangulationsprinzip, mit
- einem Lichtsender zum Aussenden von Sendelicht (18) in den Überwachungsbereich (20), wobei der Lichtsender eine Lichtquelle (14) und eine Sendeoptik (16), welche eine optische Achse (O) aufweist, umfasst,
- einem Lichtempfänger (22), welcher mehrere Empfängerelemente aufweist, zum Empfangen von Licht aus dem Überwachungsbereich (20), welches von einem zu detektierenden Objekt (40) remittiert wird, und
- einer dem Lichtempfänger (22) vorgeordneten Empfangsoptik (24),
wobei der Lichtsender, der Lichtempfänger (22) und die Empfangsoptik (24) derart zueinander angeordnet sind, dass sich die Position eines mittels der Empfangsoptik (24) aus dem remittierten Licht (26) auf dem Lichtempfänger (14) erzeugten Lichtflecks (32) in einer Triangulationsrichtung (T) in Abhängigkeit von der Entfernung des Objekts (40) ergibt, **dadurch gekennzeichnet, dass** die Sendeoptik (16) dazu eingerichtet ist, das von der Lichtquelle (14) emittierte Licht zu einem Sendelichtbündel (18) zu fokussieren, welches beim Auftreffen auf eine Abtastebene (26), welche zu der optischen Achse (O) der Sendeoptik (16) um einen vorgegebenen Neigungswinkel (β) in der Triangulationsrichtung (T) geneigt verläuft, eine Abtastlichtlinie (28) erzeugt, die aus Richtung des Überwachungssensors (12) betrachtet konkav gekrümmt verläuft.

2. Überwachungssensor nach Anspruch 1,
**dadurch gekennzeichnet,**
**dass** der Verlauf der Abtastlichtlinie (28) auf der Abtastebene (26) einem Segment eines Kreises, einer Parabel, einer Hyperbel oder einer Ellipse entspricht.

3. Überwachungssensor nach einem der vorhergehenden Ansprüche,
**dadurch gekennzeichnet,**
**dass** das von der Sendeoptik (16) fokussierte Sendelichtbündel (18) in Projektion auf eine senkrecht zur optischen Achse (O) der Sendeoptik (16) verlaufende Referenzabtastebene (34) eine gekrümmte Referenzlichtlinie (36) erzeugt.

4. Überwachungssensor (12) nach einem der vorhergehenden Ansprüche, **dadurch gekennzeichnet,**
**dass** das Intensitätsprofil der Abtastlichtlinie (28) in Längsrichtung und/oder in Querrichtung der Abtastlichtlinie (28) homogen ist.

5. Überwachungssensor (12) nach einem der vorhergehenden Ansprüche, **dadurch gekennzeichnet,**
**dass** die Empfangsoptik (24) dazu eingerichtet ist, ein einer geraden Linie entsprechendes Abbild der Abtastlichtlinie (28) auf dem Lichtempfänger (22) zu erzeugen.

6. Überwachungssensor (12) nach Anspruch 5,
**dadurch gekennzeichnet,**
**dass** die Empfängerelemente des Lichtempfängers (22) in Reihen und Spalten angeordnet sind, und
**dass** das Abbild der Abtastlichtlinie (28) auf dem Lichtempfänger (22) parallel zu den Reihen oder Spalten verläuft.

7. Überwachungssensor (12) nach einem der vorhergehenden Ansprüche, **dadurch gekennzeichnet,**
**dass** die Sendeoptik (16) und/oder die Empfangsoptik (24) jeweils wenigstens eine Linse umfassen, wobei zumindest eine lichtbrechende Fläche der Linse als Freiformfläche ausgebildet ist.

8. Überwachungssensor (12) nach Anspruch 7,
**dadurch gekennzeichnet,**
**dass** die Sendeoptik (16) wenigstens zwei Freiformflächen aufweist, wobei eine erste Freiformfläche derart ausgestaltet ist, dass diese für sich genommen eine gerade verlaufende Abtastlichtlinie (28) auf der Abtastebene (26) erzeugen würde, und wobei eine zweite Freiformfläche derart ausgestaltet ist, dass diese die Krümmung der Abtastlichtlinie (28) bewirkt.

9. Flurgebundenes Fahrzeug (10), insbesondere fahrerloses Transportfahrzeug, mit einem Überwachungssensor (12) nach einem der vorhergehenden Ansprüche zum Überwachen eines Fahrwegs (26) des Fahrzeugs (10).

10. Fahrzeug (10) nach Anspruch 9,
**dadurch gekennzeichnet,**
**dass** der Überwachungssensor (12) von dem zu überwachenden Fahrweg (26) beabstandet an dem Fahrzeug (10) angeordnet ist und derart ausgerichtet ist, dass die optische Achse (O) der Sendeoptik (16) einen ebenen Fahrweg (26) in einem vorgegebenen Abstand von dem Fahrzeug (10) schneidet.

## Claims

1. A monitoring sensor (12) for the spatially resolved detection of objects in a monitored zone (20) in accordance with the principle of triangulation, comprising
- a light transmitter for transmitting transmitted light (18) into the monitored zone (20), wherein the light transmitter comprises a light source (14) and a transmission optics (16) which has an optical axis (O);
- a light receiver (22) which has a plurality of receiver elements for receiving light from the monitored zone (20) that is remitted by an object (40) to be detected; and
- a reception optics (24) arranged upstream of the light receiver (22),
wherein the light transmitter, the light receiver (22), and the reception optics (24) are arranged with respect to one another such that the position of a light spot (32) in a direction of triangulation (T) results in dependence on the distance of the object (40), with the light spot (32) being generated on the light receiver (14) from the remitted light (26) by means of the reception optics (24),
**characterized in that**
the transmission optics (16) is configured to focus the light emitted by the light source (14) to form a transmitted light beam (18) which, on an incidence on a scanning plane (26) which extends inclined by a predefined angle of inclination (β) in the direction of triangulation (T) with respect to the optical axis (O) of the transmission optics (16), generates a scanning light line (28) which extends in a concavely curved manner viewed from the direction of the monitoring sensor (12).

2. A monitoring sensor in accordance with claim 1,
**characterized in that**
the extent of the scanning light line (28) on the scanning plane (26) corresponds to a segment of a circle, of a parabola, of a hyperbola, or of an ellipse.

3. A monitoring sensor in accordance with one of the preceding claims, **characterized in that**
the transmitted light beam (18) focused by the transmission optics (16) generates a curved reference light line (36) in projection onto a reference scanning plane (34) extending perpendicular to the optical axis (O) of the transmission optics (16).

4. A monitoring sensor (12) in accordance with any one of the preceding claims,
**characterized in that**
the intensity profile of the scanning light line (28) is homogeneous in a longitudinal direction and/or in a transverse direction of the scanning light line (28).

5. A monitoring sensor (12) in accordance with any one of the preceding claims,
**characterized in that**
the reception optics (24) is configured to generate an image of the scanning light line (28) on the light receiver (22) corresponding to a straight line.

6. A monitoring sensor (12) in accordance with claim 5,
**characterized in that**
the receiver elements of the light receiver (22) are arranged in rows and columns; and
**in that** the image of the scanning light line (28) on the light receiver (22) extends in parallel with the rows or columns.

7. A monitoring sensor (12) in accordance with any one of the preceding claims,
**characterized in that**
the transmission optics (16) and/or the reception optics (24) respectively comprises/comprise at least one lens, with at least one light-refracting surface of the lens being formed as a free-form surface.

8. A monitoring sensor (12) in accordance with claim 7,
**characterized in that**
the transmission optics (16) has at least two free-form surfaces, with a first free-form surface being designed such that it would per se generate a scanning light line (28) extending straight on the scanning plane (26), and with a second free-form surface being designed such that it effects the curvature of the scanning light line (28).

9. A floor-bound vehicle (10), in particular a driverless transport vehicle, having a monitoring sensor (12) in accordance with any one of the preceding claims for monitoring a route (26) of the vehicle (10).

10. A vehicle (10) in accordance with claim 9,
**characterized in that**
the monitoring sensor (12) is arranged at the vehicle (10) spaced apart from the route (26) to be monitored and is aligned such that the optical axis (O) of the transmission optics (16) intersects a planar route (26) at a predefined spacing from the vehicle (10).

## Revendications

1. Capteur de surveillance (12) pour la détection à résolution spatiale d'objets dans une zone à surveiller (20) selon le principe de triangulation, comportant
- un émetteur de lumière pour émettre une lumière d'émission (18) jusque dans la zone à surveiller (20), l'émetteur de lumière comprenant uns source de lumière (14) et une optique d'émission (16) qui présente un axe optique (O),
- un récepteur de lumière (22) qui comprend plusieurs éléments récepteurs pour recevoir la lumière en provenance de la zone à surveiller (20), qui est réémise par un objet à détecter (40), et
- une optique de réception (24) agencée en amont du récepteur de lumière (22),
l'émetteur de lumière, le récepteur de lumière (22) et l'optique de réception (24) étant agencés les uns par rapport aux autres de telle sorte que la position d'une tache de lumière (32) générée à partir de la lumière réémise (26) sur le récepteur de lumière (14) au moyen de l'optique de réception (24) dans une direction de triangulation (T) résulte en fonction de la distance de l'objet (40),
**caractérisé en ce que**
l'optique d'émission (16) est conçue pour focaliser la lumière émise par la source de lumière (14) pour donner un faisceau lumineux d'émission (18) qui, lors de l'impact sur un plan de balayage (26) s'étendant de façon inclinée par rapport à l'axe optique (O) de l'optique d'émission (16) d'un angle d'inclinaison donnée (β) dans la direction de triangulation (T), génère une ligne de lumière de balayage (28) qui, vue depuis la direction du capteur de surveillance (12), s'étend de façon incurvée concave.

2. Capteur de surveillance selon la revendication 1,
**caractérisé en ce que**
l'allure de la ligne de lumière de balayage (28) sur le plan de balayage (26) correspond à un segment d'un cercle, d'une parabole, d'une hyperbole ou d'une ellipse.

3. Capteur de surveillance selon l'une des revendications précédentes, **caractérisé en ce que**
en projection sur un plan de balayage de référence (34) s'étendant perpendiculairement à l'axe optique (O) de l'optique d'émission (16), le faisceau lumineux d'émission (18) focalisé par l'optique d'émission (16) génère une ligne de lumière de référence (36) incurvée.

4. Capteur de surveillance (12) selon l'une des revendications précédentes, **caractérisé en ce que**
le profil d'intensité de la ligne de lumière de balayage (28) en direction longitudinale et/ou en direction transversale de la ligne de lumière de balayage (28) est homogène.

5. Capteur de surveillance (12) selon l'une des revendications précédentes, **caractérisé en ce que**
l'optique de réception (24) est conçue pour générer une image de la ligne de lumière de balayage (28), ladite image correspondant à une ligne droite, sur le récepteur de lumière (22).

6. Capteur de surveillance (12) selon la revendication 5,
**caractérisé en ce que**
les éléments récepteurs du récepteur de lumière (22) sont agencés en rangées et en colonnes, et
l'image de la ligne de lumière de balayage (28) sur le récepteur de lumière (22) s'étend parallèlement aux rangées ou aux colonnes.

7. Capteur de surveillance (12) selon l'une des revendications précédentes, **caractérisé en ce que**
l'optique d'émission (16) et/ou l'optique de réception (24) comprennent chacune au moins une lentille, au moins une surface réfractive de la lentille étant réalisée sous forme de surface de forme libre.

8. Capteur de surveillance (12) selon la revendication 7,
**caractérisé en ce que**
l'optique d'émission (16) présente au moins deux surfaces de forme libre, une première surface de forme libre étant réalisée de telle sorte que celle-ci, prise à elle-seule, générerait une ligne de lumière de balayage (28) droite sur le plan de balayage (26), et la seconde surface de forme libre étant réalisée de telle sorte que celle-ci provoque la courbure de la ligne de lumière de balayage (28).

9. Véhicule (10) guidé au sol, en particulier véhicule de transport sans conducteur, comportant un capteur de surveillance (12) selon l'une des revendications précédentes pour surveiller un trajet de déplacement (26) du véhicule (10).

10. Véhicule (10) selon la revendication 9,
**caractérisé en ce que**
le capteur de surveillance (12) est agencé sur le véhicule (10) à distance du trajet de déplacement à surveiller (26) et est orienté de telle sorte que l'axe optique (O) de l'optique d'émission (16) coupe un trajet de déplacement plan (26) à une distance donnée du véhicule (10).
